(19) Europäisches Patentamt
European Patent Office
Office européen des brevets

(11) EP 4 303 967 A1

(12) # EUROPEAN PATENT APPLICATION
published in accordance with Art. 153(4) EPC

(43) Date of publication:
**10.01.2024 Bulletin 2024/02**

(21) Application number: **22763099.3**

(22) Date of filing: **24.02.2022**

(51) International Patent Classification (IPC):
***H01M 4/96*** *(2006.01)* ***H01M 4/88*** *(2006.01)*
***H01M 8/18*** *(2006.01)*

(52) Cooperative Patent Classification (CPC):
**H01M 4/88; H01M 4/96; H01M 8/18;** Y02E 60/50

(86) International application number:
**PCT/JP2022/007621**

(87) International publication number:
**WO 2022/186043 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2021 JP 2021035448**

(71) Applicant: **Asahi Kasei Kabushiki Kaisha**
**Tokyo 1000006 (JP)**

(72) Inventors:
- **SUZUKI, Atsushi**
  **Tokyo 100-0006 (JP)**
- **YAMASHITA, Junya**
  **Tokyo 100-0006 (JP)**
- **MITAMURA, Yoshimichi**
  **Tokyo 100-0006 (JP)**

(74) Representative: **Hoffmann Eitle**
**Patent- und Rechtsanwälte PartmbB**
**Arabellastraße 30**
**81925 München (DE)**

(54) **ELECTRODE FOR REDOX FLOW BATTERY, AND METHOD FOR PRODUCING ELECTRODE FOR REDOX FLOW BATTERY**

(57) An electrode for a redox flow battery including a carbon structural body,
wherein, in a measurement of surface functional group concentrations of the carbon structural body, a carbon concentration is 82.0% or higher and 98.0% or lower, a nitrogen concentration is 1.0% or higher and 10.0% or lower, and an oxygen concentration is 1.0% or higher and 8.0% or lower.

EP 4 303 967 A1

## Description

Technical Field

The present invention relates to an electrode for a redox flow battery, and a method for producing an electrode for a redox flow battery.

Background Art

Redox flow batteries supplying electrolyte solutions to electrodes and carrying out battery reactions typically have, as a main constituent, a battery cell having a porous positive electrode to which a positive electrode electrolyte solution is supplied, a porous negative electrode to which a negative electrode electrolyte solution is supplied, a membrane intervening between both the electrodes, and non-impregnatable current collector plates contacting with the porous electrodes. For the electrodes, from the viewpoint of the acid resistance, the liquid permeability and the conductivity, porous carbon electrodes are used.
The performance of the carbon electrodes of redox flow batteries can be improved by the surface modification of the electrodes to improve the wettability and the reactivity with an electrolyte solution; as examples thereof, there are reported an example in which a surface treatment of electrodes is carried out in ammonia (for example, see Patent Literature 1) and an example in which a surface treatment causing nitrogen functional groups and oxygen functional groups to coexist is carried out by coating a carbon electrode on a felt with a melamine-based resin compound and calcining the resultant at 500°C (for example, see Patent Literature 2).

Citation List

Patent Literature

Patent Literature 1: Chinese Patent Application Publication CN102487142
Patent Literature 2: Chinese Patent Application Publication CN110194453

Summary of Invention

Technical Problem

In reaction systems in redox flow batteries, although by modifying an electrode surface by introducing oxygen functional groups thereto, there can be anticipated an improvement in the wettability of an electrolyte solution and a reduction in the reaction resistance between the electrode and an electrolyte, by such a modification alone, the electrode performance becomes liable to lower by use for a long period. Specifically, although the initial battery performance exhibits high numerical values, when the number of cycling times is increased, the electrode performance is likely to lower. In particular, the electrode performance of negative electrodes is liable to deteriorate.
On the other hand, in Patent Literatures 1 and 2, although technologies are proposed which improve the electrode performance by modifying with various functional groups including nitrogen-based functional groups, since a carbon material nitrided under the condition described in Patent Literature 1 is low in the degree of carbonization and low in the degree of crystallinity of carbon, the carbon material is liable to be nitrided excessively. In particular, paying attention to Examples of Patent Literature 1, the proportion of the surface carbon in an untreated stage is lower than 75%. In Patent Literature 2, since an electrode is coated with a polymer containing nitrogen molecules in a later stage and then carbonized at a low temperature, it is difficult to increase the calcinating temperature in an attempt to cause elements other than carbon to remain, the coated carbon is low in the crystallinity, and it is difficult to increase the electric conductivity of the coated portion.
A carbon material low in the crystallinity has apprehension for the long-term electrical durability. On the other hand, if the degree of carbonization and the crystallinity of the carbon material is increased, it would be difficult to perform the surface modification resulting in being unable to ensure the wettability which is important in redox flow batteries. If oxygen functional group is introduced into the surface in a large amount in an attempt to ensure the wettability, it would compromise the performance due to the influence on electron conductivity, and lead to a remarkable weight loss due to excessive oxidation and the weakening of the physical strength.
The present invention takes the above problems in the conventional technologies into consideration and has an object to provide an electrode for a redox flow battery which can retain the electrode performance even after use for a long period, and a method for producing the same.

Solution to Problem

As a result of exhaustive studies to solve the above problems, the present inventors have found that the above problems can be solved by regulating the concentrations of surface functional groups of an electrode for a redox flow battery in predetermined ranges, and this finding has led to the completion of the present invention.
That is, the present invention includes the following aspects.

[1] An electrode for a redox flow battery comprising a carbon structural body,
wherein, in a measurement of surface functional group concentrations of the carbon structural body, a carbon concentration is 82.0% or higher and 98.0% or lower; a nitrogen concentration is 1.0% or higher and 10.0% or lower; and an oxygen concentration is 1.0% or higher and 8.0% or lower.
[2] The electrode for the redox flow battery according to [1], wherein the carbon structural body is a carbon foam having a three-dimensional network structure having continuous pores.
[3] The electrode for the redox flow battery according to [1] or [2], wherein a crystallite size Lc of the carbon structural body is 1.60 or larger.
[4] The electrode for the redox flow battery according to any one of [1] to [3],

wherein the electrode for the redox flow battery has a flow path shape for an electrolyte solution, and
the flow path shape is formed by a circulation portion constituting a flow path and an electrode portion where the carbon structural body is present in a sheet thickness direction thereof.

[5] The electrode for the redox flow battery according to [4], wherein an aspect ratio of the width a of the electrode portions to a thickness z thereof, in terms of z/a, is lower than 1.0.
[6] The electrode for the redox flow battery according to [4] or [5], wherein a ratio of an occupied area A of the electrode portion to an occupied area B of the circulation portion, in terms of A/B, is 1.0 or higher.
[7] A membrane electrode assembly for a redox flow battery, comprising the electrode for the redox flow battery according to any one of [1] to [6], and an ion-exchange membrane.
[8] A membrane electrode assembly for a redox flow battery, comprising:

a positive electrode selected from the electrode for the redox flow battery according to any one of [4] to [6];
an ion-exchange membrane disposed on the positive electrode; and
a negative electrode selected from the electrode for the redox flow battery, and disposed on an opposite side of the ion-exchange membrane to the positive electrode on the ion-exchange membrane,
wherein each of the circulation portion and the electrode portion in the positive electrode is arranged on a same position as each of those in the negative electrode with the ion-exchange membrane therebetween.

[9] A redox flow battery comprising, as a negative electrode, the electrode for the redox flow battery according to any one of [1] to [6].
[10] A method for producing an electrode for a redox flow battery comprising a carbon structural body, the method comprising:

a surface oxidation step of bringing a carbon material having a carbon concentration of 92.0% or higher in a measurement of surface functional group concentrations into contact with a first gas comprising nitrogen and oxygen, to thereby obtain a carbon structural body precursor; and
a surface modification step of, after the surface oxidation step, bringing the carbon structural body precursor into contact with a second gas comprising ammonia to thereby obtain a carbon structural body,
wherein, in the measurement of the surface functional group concentrations of the carbon structural body, the oxygen concentration is 1.0% or higher and 8.0% or lower to thereby obtain a carbon material.

[11] The method for producing the electrode for the redox flow battery according to [10], further comprising a carbonization step of heating a carbon material precursor at 1,500°C or higher and 2,500°C or lower to thereby obtain the carbon material.

Advantageous Effects of Invention

According to the present invention, there can be provided an electrode, for a redox flow battery, capable of retaining the electrode performance even after use for a long period, and a method for producing the same.

Brief Description of Drawings

[Figure 1] Figure 1 shows a schematic view of a porous carbon electrode having an interdigitated flow path shape, viewed from above the plane of the electrode.
[Figure 2] Figure 2 shows a view of a porous carbon electrode having an interdigitated flow path shape, viewed from obliquely above the electrode.
[Figure 3] Figure 3 shows a model view of a flow path shape when the ratio of occupied areas is determined, viewed from above the plane of the flow path shape.
[Figure 4] Figure 4 shows a view showing an image of a carbon foam electrode fabricated in Example 1A.
[Figure 5] Figure 5 shows a view showing flow path portions installed on both edges of a carbon foam electrode, in the carbon foam electrode fabricated in Example 1B.
[Figure 6] Figure 6 shows a schematic view of a carbon foam electrode fabricated in Example 5A, viewed from above the plane of the electrode.

Description of Embodiments

Hereinafter, an embodiment of the present invention (hereinafter, referred to also as "present embodiment") will be described in detail. Here, the present invention is not limited to the following present embodiment, and may be carried out through various change and modification thereof within the scope of its gist.

[Electrode for a redox flow battery]

An electrode for a redox flow battery of the present embodiment is an electrode, for a redox flow battery, comprising a carbon structural body, wherein in a measurement of the surface functional group concentrations of the carbon structural body, the carbon concentration is 82.0% or higher and 98.0% or lower; the nitrogen concentration is 1.0% or higher and 10.0% or lower; and the oxygen concentration is 1.0% or higher and 8.0% or lower. The electrode for a redox flow battery of the present embodiment, since being thus constituted, can retain the electrode performance even after use for a long period, and accordingly, by being applied to a redox flow battery, the battery performance over a long period can be ensured.

[Surface functional group concentrations of the carbon structural body]

In the present embodiment, the surface functional group concentrations of the carbon structural body are as follows: the carbon concentration is 82.0% or higher and 98.0% or lower; the nitrogen concentration is 1.0% or higher and 10.0% or lower; and the oxygen concentration is 1.0% or higher and 8.0% or lower.
The carbon concentration is 82.0% or higher, preferably 85% or higher, more preferably 88% or higher and still more preferably 90% or higher from the viewpoint that such a concentration improves the degree of crystallinity and the long-period stability when the carbon structural body is used for an electrode for a redox flow battery. On the other hand, the concentration is 98.0% or lower, preferably 96% or lower and more preferably 94% or lower from the viewpoint that such a concentration provides a good wettability to an electrolyte solution and lowers cell resistance.
The nitrogen concentration is 1.0% or higher, preferably 1.2% or higher and more preferably 1.5% or higher from the viewpoint that such a concentration improves a long-period stability when the carbon structural body is used for an electrode for a redox flow battery. On the other hand, the nitrogen concentration is 10.0% or lower, preferably 7.0% or lower and more preferably 5.0% or lower from the viewpoint that such a concentration provides a good wettability to an electrolyte solution and lowers cell resistance.
The oxygen concentration is 1.0% or higher, preferably 2.0% or higher and more preferably 3.0% or higher from the viewpoint that such a concentration provides a good wettability to an electrolyte solution and lowers cell resistance. On the other hand, the oxygen concentration is 8.0% or lower, preferably 7.0% or lower and more preferably 6.0% or lower, from the viewpoint that such a concentration improves a balance between the initial electrode performance and the long-period stability when the carbon structural body is used for an electrode for a redox flow battery.
Here, with regard to the nitrogen concentration, since by nitrogen being made to be contained in not lower than a certain concentration, the nitrogen contributes to the performance retention for a long period, but does not take part in the improvement in the degree of crystallinity and causes defects in the skeleton, the property of nitrogen contributing as an element is nearer the behavior of oxygen than that of carbon. Hence, with regard to the relationship between the carbon, oxygen and nitrogen concentrations, in comprehensive consideration of the durability for a long period and the wettability with an electrolyte solution, it is especially preferable that the carbon concentration is 90% or higher; and the total of the oxygen concentration and the nitrogen concentration is 10% or lower.

In the present embodiment, from the viewpoint of more improving the long-period stability when the carbon structural body is used for an electrode for a redox flow battery, the nitrogen concentration is preferably 1/4 or higher of the oxygen concentration, and more preferably 1/2 or higher of the oxygen concentration. It is preferable that the nitrogen concentration is not higher than the oxygen concentration.

The surface functional group concentrations can be measured by a method described later in Examples. The surface functional group concentrations can be regulated in the above range by producing the carbon structural body by adopting a production method described later, or otherwise.

(Shape of the carbon structural body)

The carbon structural body of the present embodiment can be used as an electrode for a redox flow battery; and the shape, the material and the like thereof are not especially limited as long as the above-mentioned each surface functional group concentrations is in the predetermined range, and various well-known shapes and materials can be adopted. In the present embodiment, as the carbon structural body, for example, a carbon felt constituted of carbon fibers, and a carbon foam having a three-dimensional network structure having continuous pores can be adopted; and sheet-shaped ones thereof can typically be used. In the present embodiment, sheet-shaped means a planar shape in which among three dimensions of length, width and thickness to specify the size of the carbon structural body, the smallest dimension is thickness.

Since the carbon structural body of the present embodiment functions as a reaction field directly transferring electrons to and from an electrolyte solution, from the viewpoint that the reaction is caused uniformly in a cell, it is preferable that the carbon structural body is the carbon foam having a three-dimensional network structure having continuous pores.

[Thickness of the carbon structural body]

The thickness of the carbon structural body in the present embodiment is not especially limited, and can be made to be, for example, 100 μm or larger and 4,000 μm or smaller. In the present embodiment, in the case where the carbon structural body is the carbon felt constituted of carbon fibers, the thickness thereof is preferably 1,000 μm or larger and 3,000 μm or smaller. In the present embodiment, in the case where the carbon structural body is the carbon foam having a three-dimensional network structure having continuous pores, the thickness thereof is preferably 200 μm or larger and 700 μm or smaller.

(Porosity of the carbon structural body)

The porosity of the carbon structural body in the present embodiment is not especially limited, and can be made to be, for example, 70% or higher and 99% or lower. In the present embodiment, in the case where the carbon structural body is the carbon felt constituted of carbon fibers, the porosity thereof is preferably 87% or higher and 97% or lower from the viewpoint of the flexibility and the self-supportability. In the present embodiment, in the case where the carbon structural body is the carbon foam having a three-dimensional network structure having continuous pore voids, the porosity thereof is preferably 85% or higher and 95% or lower from the viewpoint of the flexibility and the permeability.

The porosity can be determined from the bulk density and the real density. The bulk density is a density based on the volume including pores contained in the carbon structural body. On the other hand, the real density is a density based on the volume the carbon structural body occupies. From the bulk density ρbulk and the real density ρreal, the porosity Vf, pore can be determined by using the following formula (1):

$$\text{Vf, pore} = ((1/\rho\text{bulk}) - (1/\rho\text{real}))/(1/\rho\text{bulk}) \times 100\ (\%) \quad \dots (1)$$

Further, the bulk density ρbulk and the real density ρreal can be determined as follows.

[Measurement of the bulk density]

First, the size of the carbon structural body is measured by using slide calipers or the like, and the bulk volume Vbulk of the carbon structural body is determined from the acquired size. Then, the mass M of the carbon foam is measured by using a precision balance. From the acquired mass M and bulk volume Vbulk, the bulk density ρbulk of the carbon foam can be determined by using the following formula (2):

$$\rho bulk = M/Vbulk \ldots (2)$$

[Measurement of the real density]

The real density ρreal of the carbon structural body can be determined by a sink-and-float method using a mixed solvent composed of n-heptane, carbon tetrachloride and ethylene dibromide. Specifically, first, the carbon structural body in a suitable size is put in a stoppered test tube. Then, the three solvents are suitably mixed and added to the test tube, and allowed to stand still in a thermostat chamber at 30°C. In the case where the test piece floats on the solvent, the density of the solvent is regulated by adding n-heptane, which has a low density. On the other hand, in the case where the test piece sinks, the density of the solvent is regulated by adding ethylene dibromide, which has a high density. These operations are repeated so the test piece as to float in the solvent. Finally, the density of the solvent is measured by using a Gay-Lussac pycnometer.

[Crystal size Lc of the carbon structural body]

In the present embodiment, the crystal size Lc of the carbon structural body is not especially limited, and is preferably 1.10 nm or larger, and from the viewpoint of the conductivity, more preferably 1.60 nm or larger and still more preferably 1.8 nm or larger. From the viewpoint of sufficiently ensuring the physical strength, the crystal size Lc is preferably 4.0 nm or smaller and more preferably 3.0 nm or smaller.

The crystal size Lc can be measured by a method described later in Examples. The crystal size Lc can be regulated in the above range, for example, by raising the carbonizing temperature in a production method described later, or otherwise.

(Flow path shape)

As described later, when the electrode for a redox flow battery of the present embodiment is applied to a redox flow battery, a non-impregnatable current collector plate contacting with the electrode for a redox flow battery can be used. The non-impregnatable current collector plate may be processed in some cases so as to be installed with a flow path shape on the surface thereof, in order to reduce the pressure loss of an electrolyte solution by an improvement in the permeability of the electrolyte solution. In particular, in the case where the electrode thickness becomes 1.0 mm or smaller when a redox flow battery is fabricated, it is preferable that by ensuring spaces in not less than a certain amount in the electrode thickness direction, an excessive rise in the pressure loss of an electrolyte solution is prevented and the circulation property (referred to also as "permeability") of the electrolyte solution is ensured. From such a viewpoint, in the case where the electrode for a redox flow battery of the present invention is compressed to a thickness of 1.0 mm or smaller, the electrode may have a shape having the flow path shape. In the case where the flow path shape is formed not on the current collector plate itself but on the electrode for a redox flow battery of the present embodiment, a cell can be simply assembled and measurement can be carried out without using a dipolar plate having flow paths which is difficult to be processed. It is preferable that the flow path shape in the present embodiment is formed by a circulation portion constituting a flow path and an electrode portion where the carbon structural body is present in the sheet thickness direction thereof. It can be said that the electrode portions are portions where the carbon structural body is present in the sheet thickness direction, whereas the circulation portions are portions where the carbon structural body is not present in the sheet thickness direction of the electrode for a redox flow battery.

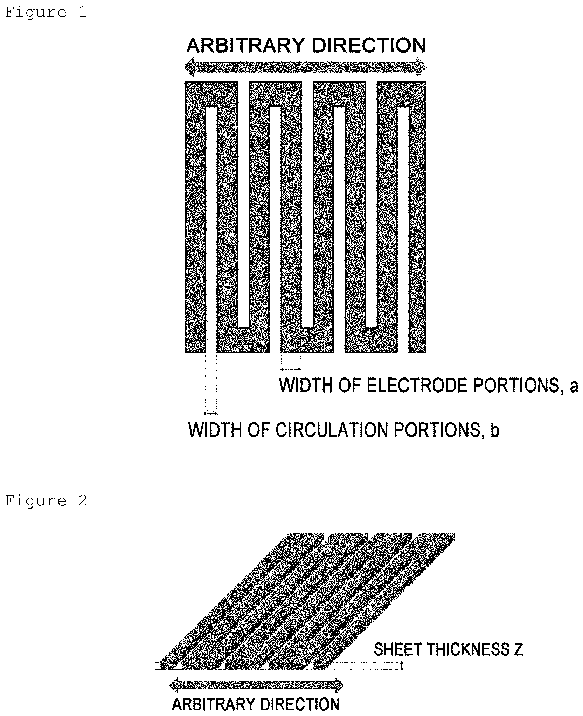

The flow path shape is not especially limited, and in the present technical field, a shape called an interdigitated shape or a serpentine shape, or the like can be adopted. In the present embodiment, as exemplified in Figure 1, an interdigitated shape is preferable. Here, with regard to the interdigitated shape, it can also be one in which the circulation portions themselves have a double-sided comb shape and the electrode portions themselves have a rectangular wave (serpentine) shape. Hereinafter, the flow path shape will be described based on an example of Figure 1. The arbitrary direction in Figure 1 can also be paraphrased to be the plane direction perpendicular to the sheet thickness direction of the electrode for a redox flow battery; the electrode portions and the circulation portions are alternately disposed in such a direction, and resultantly, the electrode portions itself make a serpentine shape and the circulation portions make a double-sided comb shape shape. Here, the thickness of the electrode for a redox flow battery is taken as z (hereinafter, referred to also as "sheet thickness z"); as illustrated in Figure 1, the average value of widths of the electrode portions interposed between the circulation portions, as a (hereinafter, referred to also as "width of electrode portions, a"), and the average value of widths of the circulation portions interposed between the electrode portions, as b (hereinafter, referred to also as "width of circulation portions, b"), and a preferable flow path shape in the present embodiment will be described hereinafter.

The width of the electrode portions, a, is, from the viewpoint of improving the permeability of an electrolyte solution, preferably 15 mm or smaller, more preferably 12 mm or smaller and still more preferably 8 mm or smaller. The width of the electrode portions, a, is, from the viewpoint of raising the physical strength to keep easy handleability, preferably 1 mm or larger, more preferably 3 mm or larger and still more preferably 4 mm or larger.

As described above, the width of the electrode portions, a, is preferably 1 mm or larger and 15 mm or smaller, more preferably 3 mm or larger and 12 mm or smaller and still more preferably 4 mm or larger and 8 mm or smaller.

The width of the circulation portions, b, is, from the viewpoint of improving the permeability of the electrolyte solution, preferably 0.5 mm or larger, more preferably 1 mm or larger and still more preferably 1.5 mm or larger. The width of the circulation portions, b, is, from the viewpoint of ensuring the function as an electrode of the electrode portions, preferably 10 mm or smaller, more preferably 7 mm or smaller and still more preferably 5 mm or smaller.

As described above, the width of the circulation portions, b, is preferably 0.5 mm or larger and 10 mm or smaller, more preferably 1 mm or larger and 7 mm or smaller and still more preferably 1.5 mm or larger and 5 mm or smaller.

Here, the width of the circulation portions, b, and the width of the electrode portions, a, can be calculated by a method described in Examples.

The sheet thickness z of the electrode for a redox flow battery is preferably 300 μm or larger and 5,000 μm or smaller. In order to indicate the sheet thickness z, a view viewed from obliquely above an electrode for a redox flow battery having an interdigitated flow path shape is shown.

The sheet thickness z of 300 μm or larger may improve the permeability of an electrolyte solution, and besides, tends to improve the battery cell performance due to an increase in the battery reaction field. When the sheet is used as an electrode for a redox flow battery, the sheet thickness z is more preferably 450 μm or larger and still more preferably 600 μm or larger, from the viewpoint of suppressing the flow pressure loss of an electrolyte solution. On the other hand, the sheet thickness z of 5,000 μm or smaller suppresses the resistance within the electrode and tends to potentially suppress lowering of the battery cell performance due to the resistance increase. From the viewpoint of reducing the cell resistance, the sheet thickness z is more preferably 2,500 μm or smaller and still more preferably 1,500 μm or smaller.

As described above, the sheet thickness z is more preferably 450 μm or larger and 2,500 μm or smaller and still more preferably 600 μm or larger and 1,500 μm or smaller.

The aspect ratio z/a of the width of the electrode portions, a, and the sheet thickness thereof z is, from the viewpoint of keeping the self-supportability of the electrode shape, preferably lower than 1.0, more preferably lower than 0.8 and still more preferably lower than 0.7. The lower limit value of the aspect ratio z/a usually may be 0.03 or higher, may also be 0.05 or higher and may also be 0.10 or higher.

The aspect ratio z/a is preferably 0.03 or higher and lower than 1.0, more preferably 0.05 or higher and lower than 0.8 and still more preferably 0.10 or higher and lower than 0.7.

The aspect ratio z/a of the width of the electrode portions of the carbon electrode, a, and the sheet thickness thereof z, is, in the case of using the carbon foam, preferably lower than 1.0. The aspect ratio z/a is, in the case of using the carbon foam or a carbon paper, preferably 0.03 or higher and lower than 1.0.

The aspect ratio z/a of the width of the electrode portions of the carbon electrode, a, and the sheet thickness thereof z, is, in the case of using the carbon felt, preferably lower than 0.8, more preferably lower than 0.6 and still more preferably lower than 0.4. Further, the aspect ratio z/a is, in the case of using a carbon nonwoven fabric, preferably 0.03 or higher and lower than 0.8, more preferably 0.05 or higher and lower than 0.6 and still more preferably 0.10 or higher and lower than 0.4.

The aspect ratio b/a of the width of the electrode portions, a, and the width of the circulation portions, b, is, from the viewpoint of increasing the battery reaction field, preferably lower than 1.1, more preferably lower than 0.9 and still more preferably lower than 0.7. The lower limit of the ratio b/a usually may be 0.1 or higher, may also be 0.3 or higher and may also be 0.5 or higher. The ratio b/a is preferably 0.1 or higher and lower than 1.1, more preferably 0.3 or higher and lower than 0.9 and still more preferably 0.5 or higher and lower than 0.7.

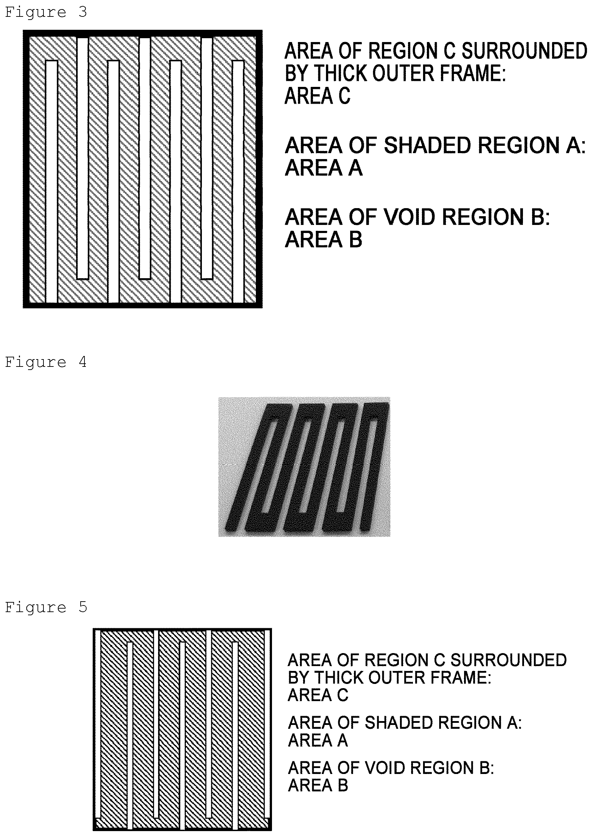

A model view, when an electrode for a redox flow battery having a flow path shape is viewed from above the plane of the electrode, is exemplified in Figure 3. As illustrated in Figure 3, each region is sectioned and it is preferable that each area value calculated is suitably regulated.

In the present embodiment, it is preferable that the ratio of an occupied area of the electrode portions to an occupied area of the circulation portions is regulated. The occupied area of the circulation portions (in the case where the circulation portions are present in a plural number, meaning the total value) corresponds to a region B in Figure 3, and the area of the region B is referred to also as area B. Further, the occupied area of the electrode portions corresponds to a region A in Figure 3, and the area of the region A is referred to also as area A. In the present embodiment, the ratio of the area A to the area B, in terms of A/B, is preferably 1.0 or higher, more preferably 1.4 or higher and still more preferably 1.8 or higher. Due to that A/B is 1.0 or higher, the battery reaction field is likely to be enabled to be increased.

The upper limit of A/B is, from the viewpoint of ensuring the permeability of an electrolyte solution, preferably 20.0 or lower, more preferably 10.0 or lower and still more preferably 5.0 or lower. The ratio A/B is preferably 1.0 or higher and 20.0 or lower, more preferably 1.4 or higher and 10.0 or lower and still more preferably 1.8 or higher and 5.0 or lower.

Since a cell chamber in the redox flow battery is generally of a rectangle shape, when the area B and the area A are determined, a region C of the minimum rectangular shape along the outermost periphery of the electrode for a redox flow battery is set. That is, in Figure 3, a numerical value obtained by subtracting an area of the region A from an area of the region C (hereinafter, referred to also as "area C") surrounded by a thick frame in Figure 3 can be taken as the area B. Alternatively, after the area B is calculated, a numerical value obtained by subtracting the area B from the area C may be taken as the area A.

Although the width of the electrode portions, a, the width of the circulation portions, b, and the areas A to C can be measured by methods described later in Examples, in the case where precise processing is possible, including the case of forming flow paths by using a Thomson punching die, and the case of carrying out laser processing by using drawing data, values of the width of the electrode portions, a, the width of the circulation portions, b, and the areas A to C may be specified from design values of the Thompson punching die, the drawing data or the like.

[Method for producing the electrode for a redox flow battery]

A method for producing the electrode for a redox flow battery of the present embodiment (hereinafter, referred to also as "production method of the present embodiment") is a method for producing the electrode for a redox flow battery having the carbon structural body, the method comprising a surface oxidation step of bringing a carbon material having a carbon concentration of 92.0% or higher in measurement of the surface functional group concentrations into contact with a first gas containing nitrogen and oxygen, to thereby obtain a carbon structural body precursor; and a surface modification step of, after the surface oxidation step, bringing the carbon structural body precursor into contact with a second gas containing ammonia to thereby obtain a carbon structural body, wherein in measurement of the surface functional group concentrations of the carbon structural body, the oxygen concentration is 1.0% or higher and 8.0% or lower. Since the production method of the present embodiment is configured as described above, the electrode for a redox flow battery which can retain the electrode performance even after use for a long period can be produced.

[Carbonization step]

It is preferable that the production method of the present embodiment further comprises a carbonization step of heating the carbon material precursor at 2,000°C or higher and 2,500°C or lower to thereby obtain a carbon material. That is, it is preferable that after the carbonization step is carried out, the surface oxidation step is carried out. In the case where the heating temperature of the carbon material precursor is 2,000°C or higher, the conductivity of the carbon material, in its turn, the carbon structural body is likely to be improved; and in the case where the heating temperature is 2,500°C or lower, the physical strength is likely to be enabled to be sufficiently ensured.

[Surface oxidation step]

In the surface oxidation step, a carbon structural body precursor is obtained by bringing a carbon material having a carbon concentration of 92.0% or higher in measurement of the surface functional group concentrations into contact with a first gas containing nitrogen and oxygen. Due to comprising this step, in the surface modification step described later, with the oxygen functional groups introduced as reaction starting points, sufficient amounts of oxygen and nitrogen functional groups can be introduced and the wettability and the retention of the long-period electrolysis performance can be achieved.

Due to that the carbon concentration is 92.0% or higher, the conductivity is likely to be raised; the carbon concentration is preferably 95% or higher and more preferably 98% or higher.

With regard to the formulation of nitrogen and oxygen in the first gas, being nitrogen : oxygen = 3.8 : 1, which is equal to the air composition, is preferable, but the formulation is not limited thereto.

The temperature condition in the surface oxidation step is not especially limited, but being 300 to 700°C is preferable. The heating time adoptable in the surface oxidation step is preferably 0.5 hour to 3 hours and more preferably 0.5 hour to 2 hours. In the case where the heating time is 0.5 hour to 2 hours, in the voltage efficiency, the initial electrode performance is likely to be enabled to be more enhanced.

[Surface modification step]

In the surface modification step, a carbon structural body is obtained by bringing the carbon structural body precursor into contact with a second gas containing ammonia. In the production method of the present embodiment, since the surface modification step is carried out after the surface oxidation step is carried out, both of nitrogen functional groups and oxygen functional groups can be imparted to the surface of the carbon structural body without impairing the crystallinity of carbon, and resultantly, the long-period stability when the carbon structural body is used for the electrode for a redox flow battery is improved.

It is preferable that the second mixed gas contains ammonia and oxygen, and the formulation of ammonia and oxygen in the second gas in this case is preferably ammonia : oxygen = between 16 : 1 and 1 : 3 and more preferably between 8 : 1 and 1 : 3. In the case where ammonia : oxygen is between 8 : 1 and 1 : 3, even after use for a long period, the electrode performance is likely to be enabled to be more highly retained. Nitrogen or argon as an inert gas may further be introduced. Since control of the processing stability is difficult when the gas total amount is small, depending on the volume and structure of a furnace to be used, the total gas amount can be regulated by the inert gas.

The temperature condition in the surface modification step is not especially limited, but is preferably 300 to 700°C. The heating time adoptable in the surface modification step is preferably 0.5 to 2 hours.

(Method of forming the flow path shape)

In a method of forming the flow path shape of the present embodiment, after the sheet-shaped electrode for a redox flow battery is prepared as described above, punching formation by a Thomson punching blade, laser processing, dicing processing or the like can be used to the electrode. Among these, from the viewpoint of the processing precision and the processing speed, the punching formation is preferable. The shape of the circulation portions is, from the viewpoint of the deformation when the flow path shape is assembled in a cell, preferably a rectangular shape when viewed from the sheet thickness direction, or may be a triangular shape or a semicircular shape.

[Membrane electrode assembly for a redox flow battery]

The electrode for a redox flow battery of the present embodiment can be used as a material for a redox flow battery, and can be used by being combined with other battery members. The electrode for a redox flow battery of the present embodiment can be made, for example, into a composite material in which the electrodes are disposed on both surfaces of an ion-exchange membrane. That is, the membrane electrode assembly for a redox flow battery of the present embodiment has the electrodes for a redox flow battery of the present embodiment and the ion-exchange membrane. The membrane electrode assembly for a redox flow battery, since being constituted as described above, can retain the electrode performance also after use for a long period; and accordingly, by applying it to a redox flow battery, the battery performance over a long period can be ensured.

The membrane electrode assembly for a redox flow battery of the present embodiment can be produced, for example, by adhering by a hot press method (also called heat press). That is, the membrane electrode assembly for a redox flow battery of the present embodiment may be in a form in which the electrodes for a redox flow battery are joined with the ion-exchange membrane by a hot press method. A specific example of the hot press method is as follows: first, the ion-exchange membrane and the porous carbon electrode are laminated and placed with a spacer having a target thickness between pressing plates of a hot press machine. Then, the pressing plates are heated to a predetermined temperature, and thereafter, the resultant is pressed. After the pressing is held for a predetermined period, the pressing plates are released and a membrane electrode assembly for a redox flow battery is taken out and cooled to room temperature.

The heating temperature in the hot press method is preferably a temperature not higher than the glass transition temperature of the ion-exchange membrane + 50°C from the viewpoint that control of the embedding depth of the carbon foam suppresses the deterioration of the ion-exchange membrane. The thickness of the spacer is, with respect to the total thickness of the carbon foam and the ion-exchange membrane to be used, preferably 30% or larger and 90% or smaller and more preferably 50% or larger and 80% or smaller. The holding time in the pressing is preferably 0.5 min or longer and 30 min or shorter and more preferably 2 min or longer and 10 min or shorter.

It is preferable that the ion-exchange membrane in the present embodiment is a membrane having a structure through which objective ions are allowed to permeate, and the ion-exchange membrane includes perfluorocarbon polymers having ion-exchange groups and hydrocarbon membranes having ion-exchange groups. The ion-exchange groups are not especially limited, but examples thereof include a -COOH group, a -SOsH group, -$PO_3H_2$ group and salts of these. The salts are not especially limited, but examples thereof include alkali metal salts, alkaline earth metal salts and amine salts. Examples of a membrane resin include perfluorocarbon polymers and hydrocarbon membranes, and from the viewpoint that the long-period durability is good, perfluorocarbon polymers are preferable.

It is preferable, from the viewpoint that the suppression of permeation of active substance ions improves the current efficiency and that the improvement in the proton conductivity reduces the resistance, that the ion-exchange membrane has an equivalent weight EW of ion-exchange groups of 600 g/eq or higher and 2,000 g/eq or lower.

The equivalent weight EW of the ion-exchange membrane to be used in the present embodiment is, from the viewpoint that the suppression of permeation of active substance ions improves the current efficiency, 600 g/eq or higher, preferably 700 g/eq or higher, more preferably 800 g/eq or higher and still more preferably 900 g/eq or higher. Further, the equivalent weight EW of the ion-exchange membrane is, from the viewpoint that the improvement in the proton conductivity reduces the resistance, 2,000 g/eq or lower, preferably 1,700 g/eq or lower, more preferably 1,500 g/eq or lower and still more preferably 1,200g/eq or lower. The equivalent weight EW of the ion-exchange membrane is more preferably 700 g/eq or higher and 1,700 g/eq or lower, still more preferably 800 g/eq or higher and 1,500 g/eq or lower and further still more preferably 900 g/eq or higher and 1,200 g/eq or lower.

Here, the equivalent weight EW means a dry mass (g) of the ion-exchange membrane per 1 eq of ion-exchange groups. The equivalent weight EW of the ion-exchange membrane can be measured by subjecting the ion-exchange membrane to a salt substitution and back titrating the resultant solution with an alkali solution. The equivalent weight EW can be regulated by the copolymerization ratio of monomers being raw materials of the ion-exchange membrane, the selection of the kinds of the monomers, and the like.

The ion-exchange membrane to be used in the present embodiment has a thickness of preferably 1 μm or larger, more preferably 5 μm or larger, still more preferably 10 μm or larger and further still more preferably 12 μm or larger, from the viewpoint that it has a good shielding property for active substances when it is used in a battery. On the other hand, it has a membrane thickness of preferably 100 μm or smaller, more preferably 80 μm or smaller and still more preferably 60 μm or smaller, from the viewpoint that the battery performance becomes good due to its decreased resistance. The ion-exchange membrane has a thickness of preferably 1 μm or larger and 100 μm or smaller, more preferably 5 μm or larger and 100 μm or smaller, still more preferably 10 μm or larger and 80 μm or smaller and further still more preferably 12 μm or larger and 60 μm or smaller.

The ion-exchange membrane to be used in the present embodiment has a thickness uniformity preferably within ±20% of the average membrane thickness, more preferably ±15% thereof and still more preferably ±10% thereof, from the viewpoint that reducing the thickness unevenness of the ion-exchange membrane improves the whole-surface contact between the electrode and the current collector plate of the membrane electrode composite for uniform performance over the whole area of the membrane electrode composite.

The thickness uniformity of the ion-exchange membrane can be evaluated by allowing the ion-exchange membrane to stand still in a thermostat chamber at 23°C at a relative humidity of 65% for 12 hours or longer, and thereafter measuring the membrane thicknesses at arbitrary 20 points with a contact-type film thickness meter (for example, manufactured by Toyo Seiki Seisakusho Ltd.).

When the membrane electrode assembly for a redox flow battery is fabricated, from the viewpoint of suppressing the contact resistance of the electrode interface in fabrication of a battery cell, it is preferable that the area, in which electrode portions of the positive electrode side and electrode portions of the negative electrode side overlap in the state that the ion-exchange membrane is interposed between the positive electrode and negative electrode, is large; and it is more preferable that the flow path shape formed in the positive electrode is the same as that formed in the negative electrode, and they are joined in the same shape with the ion-exchange membrane interposed therebetween. That is, it is preferable that the membrane electrode assembly for a redox flow battery of the present embodiment has a positive electrode selected from the electrode for a redox flow battery of the present embodiment, an ion-exchange membrane disposed on the positive electrode, and a negative electrode selected from the electrode for a redox flow battery of the present embodiment, and disposed on the opposite side of the ion-exchange membrane to the positive electrode, wherein each of the circulation portion and the electrode portion of the positive electrode is arranged on the same position as each of those in the negative electrode with the ion-exchange membrane therebetween.

It is preferable that also in the case where the ion-exchange membrane and the electrodes are not joined, the same applies to the above.

[Redox flow battery]

The electrode for a redox flow battery of the present embodiment can be used as a negative electrode of a redox flow battery. That is, a redox flow battery of the present embodiment can have the electrode for a redox flow battery of the present embodiment as its negative electrode. The redox flow battery of the present embodiment, since being thus constituted, can retain the electrode performance even after use for a long period, and accordingly, by applying the electrode to the redox flow battery, the battery performance over a long period can be ensured.

Further, the electrode for a redox flow battery of the present embodiment can be used also as a positive electrode of a redox flow battery. In the case of using the electrode for a redox flow battery of the present embodiment as its negative electrode, an electrode obtained by steps until the surface oxidation step but with no surface modification step carried out can also be used as its positive electrode in the production process of the electrode for a redox flow battery of the present embodiment.

The redox flow battery of the present embodiment typically can have the following constitution. That is, the redox flow battery includes one having an electrolyzer containing: a positive electrode (positive electrode cell chamber);

a negative electrode (negative electrode cell chamber); a membrane separating the positive electrode cell chamber and the negative electrode cell chamber; and non-impregnatable current collector plates contacting with the electrodes, wherein the positive electrode cell chamber contains a positive electrode electrolyte solution containing an active substance; the negative electrode cell chamber contains a negative electrode electrolyte solution containing an active substance; and the porous carbon electrodes of the present invention are used.

Examples

The present embodiment will be described in more detail by way of Examples and Comparative Examples, but the present embodiment is not any more limited to the following Examples.

(Example 1)

A melamine resin foam (size: 400 mm × 400 mm × 40 mm, manufactured by BASF SE, trade name: "BASOTECT W") as a carbon material precursor was, with spacers of SUS plates of 1.2 mm in thickness arranged in the circumference of the sample, interposed between graphite plates of 10 mm in thickness from the upside and downside, and introduced on a vacuum heat press machine (manufactured by Kitagawa Seiki Co. Ltd., KVHC-II). Then, the temperature of the press machine interior was raised at a temperature-rise rate of 5°C/min up to 360°C and held for 10 min, under evacuation by a vacuum pump. During the temperature rising and the holding at 360°C, pressing was carried out at a pressure of 2.0 MPa. Thereafter, the machine interior temperature was lowered down to 40°C; the vacuum pump was stopped; and the pressing was released.

Then, on the pressed melamine resin foam, a graphite plate of 400 mm in thickness× 400 mm × 16 mm was mounted; a compression load of 280 Pa was applied; and the melamine resin foam was introduced in the state that the compression load was being applied, into a heat treatment furnace (manufactured by IHI Corp., horizontal sintering furnace). Then, a nitrogen gas was fed in the furnace at a flow rate of 2.5 L/min; and simultaneously under evacuation, the temperature in the furnace was raised at a temperature-rise rate of 5°C/min up to a heat treatment temperature of 800°C. Thereafter, the feeding of the nitrogen gas was stopped and the temperature was raised at a temperature-rise rate of 5°C/min up to a heat treatment temperature of 2,000°C, and held for 2 hours, in the state that the degree of vacuum in the furnace was lower than 10 Pa, to thereby carbonize the pressed melamine resin foam (carbonization step). Thereafter, the temperature in the furnace was lowered to room temperature; and the carbonized melamine resin foam (carbon material) was taken out from the furnace.

Then, the obtained melamine resin foam was subjected to a heat treatment (surface oxidation step) in a dry air flow at 600°C for 1.5 hours to thereby obtain a melamine resin foam whose surface had been oxidized (carbon structural body precursor).

Further, the carbon structural body precursor was subjected to a heat treatment (surface modification step) in a nitrogen: oxygen: ammonia mixed gas (gas flow rates were 1.24 L/min: 0.12 L/min: 0.64 L/min, respectively) at 640°C for 1 hour to thereby fabricate a carbon structural body further having nitrogen functional groups introduced thereon. The carbon structural body was taken as an electrode 1, and the evaluation described later was made.

The structure of the carbon structural body was checked by using an X-ray CT (manufactured by Rigaku Corp., high-resolution 3D X-ray microscope nano3DX), revealing that the bonding site density was $2.0 \times 10^6/mm^2$; the average value of orientation angles in the X direction was 66.4°; the average value of orientation angles in the Y direction was 50.6°; the average value of orientation angles in the Y direction was 54.4°; the minimum value of $\theta d$ was 12°; and the proportion Nl/Nn of nodes and lines was 1.49. Further, fiber diameters of line moieties were checked by a SEM (manufactured by Hitachi, Ltd., scanning electron microscope SU8010), and the average fiber diameter was 1.8 μm. Then, the thickness was measured by using calipers and the bulk density was calculated, which resulted in a value of 164 $kg/m^3$. Then, the sheet thickness of a carbon structural body of Example 1 was measured at 20 points by a contact-type film thickness meter, and the thickness average value was calculated, and was 0.6 mm.

Further, the surface functional group concentrations of surfaces of the carbon material and the carbon structural body were measured by using an X-ray photoelectron spectrometer (manufactured by Ulvac-Phi, Inc., VersaProbe II). At this time, as main element peaks, relative element concentrations atomic% (hereinafter, at%), were calculated in percentage, of a C1s peak in the region of 285 eV, an N1s peak in the region of 400 eV, an 01s peak in the region of 533 eV and an Si2p peak in the region of 104 eV. When there were peaks exhibiting high detected intensities other than the above element peaks, concentrations of elements including these were calculated in percentage (the same applied also to the following Examples and Comparative Examples). That is, each surface functional group concentration was, with the total concentration of all functional groups detected being taken to be 100%, calculated in percentage. The details of surface functional group concentrations of the obtained carbon structural body are shown in Table 1. Then, the carbon concentration of the carbon material was measured as above, and it was 99.7%.

(Example 2)

By using the carbon structural body precursor fabricated in Example 1, as the surface modification step, a heat treatment was carried out in an atmosphere containing ammonia gas alone (gas flow rate: 2 L/min) at 850°C for 1 hour. An obtained carbon structural body was taken as an electrode 2 and the evaluation described later was made.

(Example 3)

By using a carbon fiber felt (manufactured by SGL Carbon, GFD4.6EA) as the carbon material, a heat treatment (surface oxidation step) was carried out in a dry air flow at 600°C for 1 hour to thereby obtain a carbon fiber felt whose surface had been oxidized (carbon structural body precursor). The carbon structural body precursor was further subjected to a heat treatment (surface modification step) in a nitrogen: oxygen: ammonia mixed gas (gas flow rates were 1.24 L/min: 0.12 L/min: 0.64 L/min, respectively) at 640°C for 1 hour to further introduce nitrogen functional groups to thereby fabricate a carbon structural body. The obtained carbon structural body was taken as an electrode 3 and the evaluation described later was made. Then, the carbon concentration of the carbon material was 97.9%.

(Example 4)

A carbon structural body was fabricated by the same procedure as in Example 1, except for altering the treatment temperatures in the carbonization step, the surface oxidation step and the surface modification step to the following.

Carbonization step: 1,500°C
Surface oxidation step: 570°C
Surface modification step: 600°C

The carbon concentration of the obtained carbon material was 99.2%.
The obtained carbon structural body was taken as an electrode 4 and the evaluation described later was made.

(Example 5)

A carbon structural body was fabricated by the same procedure as in Example 3, except for using a carbon fiber felt (manufactured by SGL Carbon, GFD1.5EA) as the carbon material. The obtained carbon structural body was taken as an electrode 5 and the evaluation described later was made. Then, the carbon concentration of the carbon material was 98.0%.

(Example 6)

A carbonized melamine resin foam (carbon material) was fabricated as in Example 1.
Then, the obtained melamine resin foam was subjected to a heat treatment (surface oxidation step) in a dry air flow at 600°C for 2.5 hours to thereby obtain a melamine resin foam (carbon structural body precursor) whose surface had been oxidized in a larger amount than in Example 1. Thereafter, the carbon structural body precursor was subjected to a treatment in the surface modification step under the same condition as in Example 1. An obtained carbon structural body was taken as an electrode 6 and the evaluation described later was made.

(Example 7)

A carbonized melamine resin foam (carbon material) was fabricated as in Example 1.
Then, the obtained melamine resin foam was subjected to a heat treatment (surface oxidation step) in a dry air flow at 600°C for 2.0 hours to thereby obtain a melamine resin foam (carbon structural body precursor) whose surface had been oxidized more than in Example 1.
Then, the carbon structural body precursor was subjected to a heat treatment (surface modification step) in a nitrogen:oxygen:ammonia mixed gas (gas flow rates were 1.00 L/min: 0.06 L/min: 0.94 L/min, respectively) at 650°C for 1.5 hours to thereby fabricate a carbon structural body having nitrogen functional groups introduced thereon. The obtained carbon structural body was taken as an electrode 7, and the evaluation described later was made.

(Comparative Example 1)

By using the carbon structural body precursor fabricated in Example 1, the surface modification step was not carried out and the evaluation of a redox flow battery described later was made. The carbon structural body precursor was taken as an electrode 8 and the evaluate described later was made.

(Comparative Example 2)

The carbon structural body precursor fabricated in Example 1 was, without being subjected to the surface modification step, subjected to a heat treatment in a dry air flow at 650°C for 3 hours to thereby obtain a carbon structural body precursor whose surface had been oxidized excessively. By using this, the evaluation of a redox flow battery described later was made. The excessively oxidized carbon structural body precursor was taken as an electrode 9 and the evaluation described later was made.

(Comparative Example 3)

By using the carbon structural body precursor fabricated in Example 3, the surface modification step was not carried out and the evaluation of a redox flow battery described later was made. The carbon structural body precursor was taken as an electrode 10 and the evaluation described later was made.

<Evaluation of the crystallite size>

The crystallite size Lc was evaluated from the diffraction of the (002) plane of the electrodes 1 to 10 fabricated in Examples 1 to 7 and Comparative Examples 1 to 3. A sample was crushed in a mortar and thereafter the wide-angle X-ray diffraction of the crushed sample was measured by using a desktop X-ray diffractometer D2 PHASER (manufactured by Bruker Corp.). The specific measurement condition was as follows.

[Measurement condition]

line source: Cu Kα
tube current: 30 mA
tube voltage: 40 kV
slit: 1 mm
sample rotation speed: 10 rpm
measurement time of 1 step: 0.3 sec
starting angle (2θ): 5.00°
measurement step (2θ): 0.01°
finishing angle (2θ): 90.00°

After the above measurement, acquired data were analyzed and the crystallite size Lc was calculated.

The crystallite size Lc was determined by substituting a half-width β and an angle θ of the peak maximum value of the diffraction peak of the (002) plane emerging in the region of 20 = 25° in the Scherrer formula (the following formula (A)). Here, carbonization at a higher temperature generally gives a higher crystallinity and a higher Lc value.

$$Lc = (K\lambda)/\beta\cos\theta \quad \ldots \quad (A)$$

In the above formula (A), K denotes a shape factor; and λ denotes a wavelength of the line source. The calculation was made, since the diffraction plane was the (002) plane, by substituting 0.90 as the shape factor; and since Cu Kα was used as the line source, by substituting 1.541. The results are shown in Table 1.

[Evaluation of redox flow batteries]

Redox flow batteries were fabricated by using the electrodes 1 to 10 fabricated in Examples 1 to 7 and Comparative Examples 1 to 3, and evaluated for their performance. That is, the following evaluation cells were each prepared.

There was used a cell constituted of EPDM rubbermade gaskets, a polyvinyl chloride frame, graphite separators having an interdigitated flow path shape (width: 2 mm, material: G-347), and copper end plates. Here, the cells of the electrode 3 and the electrode 5 used flat plate graphite-made separators (material: G-347) in which no flow path was formed. An ion-exchange membrane used was Nafion 212 purchased from Sigma-Aldrich Co., LLC. The film thickness of the gaskets was regulated so that the compression rate of the electrodes became 60%. The ion-exchange membrane cut out into 40 mm × 90 mm, two sheets of carbon structural bodies (the electrodes 1 to 10) cut out into 25 mm × 20 mm, and the cell constituting members were assembled in a predetermined order, and fastened with stainless bolts by a predetermined torque. The assembled cell was connected to electrolyte solution circulating apparatuses each constituted of an electrolyte solution tank and a liquid feed pump. To the electrolyte solution tanks, 30 mL of a sulfuric acid solution of vanadium was added, which had a vanadium ion concentration of 1.5 mol/L, a vanadium ionic valence number of 3.5 and a sulfate ion concentration of 4.5 mol/L, and the solution was circulated at a flow rate of 7.5 mL/min.

The charge/discharge test was carried out by using a bipolar power source, manufactured by Kikusui Electronics Corp., and by a constant-current method. The voltage range was set at 1.00 to 1.55 V; and the current density was set at 80 mA/cm$^2$. From the charge capacity Qc, the discharge capacity Qd, the average voltage in charge Vc and the average voltage in discharge Vd after 50 cycles and 200 cycles, the current efficiency CE, the voltage efficiency VE and the power efficiency EE were determined by the following equations, respectively. The results are collectively shown in Table 1.

$$CE: Qd/Qc\ (\%)$$

$$VE: Vd/Vc\ (\%)$$

$$EE: CE \times VE\ (\%)$$

The evaluation results of Examples 1 to 7 and Comparative Examples 1 to 3 are shown in Table 1.

[Table 1]

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| Surface Functional Group Concentration: C1s (atomic%) | 92.5 | 96.0 | 90.5 | 91.3 | 90.9 | 90.1 | 90.0 | 95.6 | 91.0 | 91.1 |
| Surface Functional Group Concentration: O1s (atomic%) | 4.6 | 2.8 | 4.5 | 5.0 | 4.6 | 7.7 | 2.8 | 4.4 | 9.0 | 8.2 |
| Surface Functional Group Concentration: N1s (atomic%) | 2.9 | 1.2 | 5.0 | 3.7 | 4.5 | 2.2 | 7.2 | 0.0 | 0.0 | 0.7 |
| Crystallite Size: Lc (nm) | 1.8 | 1.8 | 2.1 | 1.6 | 2.1 | 2.1 | 2.1 | 1.8 | 1.8 | 2.1 |
| Current Efficiency after 50 cycles (CE%) | 96.4% | 96.4% | 96.6% | 96.5% | 96.9% | 96.6% | 96.5% | 96.5% | 96.6% | 96.6% |
| Voltage Efficiency after 50 cycles (VE%) | 94.0% | 93.8% | 90.7% | 93.8% | 91.0% | 92.9% | 92.0% | 93.2% | 92.1% | 87.9% |
| Energy Efficiency after 50 cycles (EE%) | 90.6% | 90.4% | 87.6% | 90.5% | 88.2% | 89.7% | 88.8% | 89.9% | 89.0% | 84.9% |
| Current Efficiency after 200 cycles (CE%) | 97.1% | 97.2% | 97.5% | 97.0% | 97.6% | 97.4% | 97.2% | 97.4% | 97.5% | 97.6% |
| Voltage Efficiency after 200 cycles (VE%) | 94.2% | 93.7% | 90.8% | 93.8% | 91.0% | 93.0% | 91.9% | 92.2% | 91.1% | 86.7% |
| Energy Efficiency after 200 cycles (EE%) | 91.5% | 91.1% | 88.5% | 91.0% | 88.8% | 90.6% | 89.3% | 89.8% | 88.8% | 84.6% |
| Degree of Change in Voltage Efficiency in 50th cycle → 200th cycle | +0.2% | -0.1% | +0.1% | 0.0% | 0.0% | +0.1% | -0.1% | -1.0% | -1.0% | -1.2% |

(Example 1A)

The electrode 1 fabricated in Example 1 was, in order to be imparted with an interdigitated flow path shape as illustrated in Figure 4, subjected to the following flow path processing. In the case of viewing the shape of Figure 4 from the above, the shape could schematically be sectioned into each region as in Figure 3, and the value corresponding to an area C of Figure 3 was 34 mm × 30 mm.

The electrode 1 was punched out by using a Thomson punching blade (manufactured by Nagoya Hagata Co. Ltd.) so constituted that 7 circulation portions were installed in which the width of circulation portions, b, was 2.0 mm and the length thereof in the perpendicular direction to the width b (circulation direction of an electrolyte solution) was 30 mm to thereby obtain an electrode 1A having been processed into a flow path shape as shown in Figure 4. The thickness (sheet thickness z), the widths (the width of electrode portions, a, and the width of circulation portions, b), and an area of each region (areas A to C) of the obtained electrode 1A were checked by the following measurement methods. Further, the obtained electrode 1A was provided for the evaluation of a redox flow battery described later.

(Sheet thickness, z)

The thicknesses of the four corners of the electrode 1A were measured by using a contact-type film thickness meter (for example, manufactured by Toyo Seiki Seisakusho Ltd.), and added and divided by 4 to thereby obtain an average sheet thickness z.

(Width of electrode portions, a)

The widths of all electrode portions of the electrode were measured by a microscope (manufactured by Keyence Corp., VHX-950F), and added and divided by the number of the measurement to thereby calculate the width of electrode portions, a. The measurement position was set at a position in the region of the center whose position was nearly equal from both ends.

(Width of circulation portions, b)

The widths of all circulation channels were measured by a microscope (manufactured by Keyence Corp., VHX-950F), and added and divided by the number of the measurement to thereby calculate the width of circulation portions, b. The measurement position was set at a position in the region of the center whose position was nearly equal from both ends.

(Areas A to C)

The area C corresponding to the region C of Figure 3 was measured by using a ruler. Further, areas A and B in Figure 3 were measured and calculated by measurements of widths of portions to be measured by a ruler or a microscope (manufactured by Keyence Corp., VHX-950F). Here, any area and width values coincided well with values (design values) of the Thomson punching die.

<Evaluation of redox flow batteries>

The evaluation of the performance of a redox flow battery was made as in the above-mentioned way, except for altering the evaluation condition as follows. That is, the graphite-made separators having an interdigitated flow path shape (width: 2 mm, material: G-347) were altered to flat plate graphite-made separators having no flow path shape (material: G-347), and the gaskets were regulated so that the sheet thickness became a sheet thickness when assembled in the cell described in Table 2. Further, there were used an ion-exchange membrane cut out into 50 mm × 100 mm and the carbon structural body (electrode 1A) punched out into a size of 34 mm × 30 mm and having flow paths formed thereon.

<Permeability>

When redox flow batteries were evaluated as above, ones in which an electrolyte solution circulated were evaluated as the permeability being ensured; and ones in which the electrolyte solution did not circulate were evaluated as the permeability being unable to be ensured. The evaluation results are as shown in Table 2. In the Table, ○ denotes that the permeability could be ensured, and × denotes that the permeability could not be ensured.

(Example 1B)

The flow path processing was carried out as in Example 1A, except for altering the Thomson punching blade as follows. That is, the punching was carried out by using a Thomson punching blade so constituted that 7 circulation portions were installed in which the width of circulation portions, b, was 1.0 mm and the length thereof in the perpendicular direction to the width b (circulation direction of an electrolyte solution) was 32 mm to thereby obtain an electrode 1B having been processed into an interdigitated flow path shape. In Example 1B, as illustrated in Figure 5, flow path channels were installed on both edges of the electrode. The results of the electrode 1B measured as in Example 1A are shown in Table 2.

(Example 1C)

An electrode 1C was obtained by overlapping two sheets of the electrode 1A fabricated in Example 1A and thereafter pressing and joining the resultant. The results of the electrode 1C measured as in Example 1A are shown in Table 2.

(Example 5A)

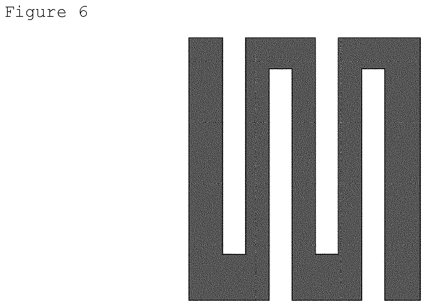

The flow path processing was carried out as in Example 1A, except for using the electrode 5 fabricated in Example 5 in place of the electrode 1, and altering the Thomson punching blade as follows. That is, the punching was carried out by using a Thomson punching blade so constituted that 4 circulation portions were installed in which the width of circulation portions, b, was 3.0 mm and the length thereof in the perpendicular direction to the width b (circulation direction of an electrolyte solution) was 30 mm to thereby obtain an electrode 5A having been processed into an interdigitated flow path shape (see Figure 6). The results of the electrode 5A measured as in Example 1A are shown in Table 2.

(Comparative Example 1A)

An electrode 8A was obtained as in Example 5A, except for using the electrode 8 fabricated in Comparative Example 1 in place of the electrode 5. The results of the electrode 8A measured as in Example 1A are shown in Table 2.

[Table 2]

| | Example 1A | Example 1B | Example 1C | Example 5A | Comparative Example 1A |
|---|---|---|---|---|---|
| Sheet Thickness, z (mm) | 0.6 | 0.6 | 1.2 | 1.5 | 0.6 |
| Width of Electrode Portions, a (mm) | 2.0 | 3.3 | 2.0 | 3.6 | 2.0 |
| Width of Circulation Portions, b mm) | 2.0 | 1.0 | 2.0 | 3.0 | 2.0 |
| Aspect Ratio (z/a) | 0.30 | 0.18 | 0.60 | 0.42 | 0.30 |
| Width of Electrode Portions, a / Width of Circulation Portions, b | 1.0 | 0.3 | 1.0 | 0.8 | 1.0 |
| Area C (mm2) | 1020 | 1020 | 1020 | 1020 | 1020 |
| Area A mm$^2$) | 600 | 796 | 600 | 660 | 600 |
| Area B (mm2) | 420 | 224 | 420 | 360 | 420 |
| Area Ratio A/B | 1.43 | 3.55 | 1.43 | 1.83 | 1.43 |
| Sheet Thickness when Assembled in Cell (mm) | 0.50 | 0.50 | 1.00 | 1.00 | 0.50 |
| Permeability in Electrolyte Solution Feed Time | ○ (circulatable) | ○ (circulatable) | ○ (circulatable) | ○ (circulatable) | ○ (circulatable) |
| Current Efficiency after 50 cycles (CE%) | 96.3% | 95.9% | 96.3% | 96.9% | 96.4% |
| Voltage Efficiency after 50 cycles (VE%) | 92.5% | 92.8% | 92.7% | 88.0% | 91.5% |

(continued)

| | Example 1A | Example 1B | Example 1C | Example 5A | Comparative Example 1A |
|---|---|---|---|---|---|
| Energy Efficiency after 50 cycles (EE%) | 89.1% | 89.0% | 89.3% | 85.3% | 88.2% |
| Current Efficiency after 200 cycles (CE%) | 97.0% | 96.6% | 97.0% | 97.6% | 97.3% |
| Voltage Efficiency after 200 cycles (VE%) | 92.5% | 92.7% | 92.6% | 88.0% | 90.4% |
| Energy Efficiency after 200 cycles (EE%) | 89.7% | 89.5% | 89.8% | 85.9% | 88.0% |
| Degree of Change in Voltage Efficiency in 50th cycle → 200th cycle | 0.0% | -0.1% | -0.1% | 0.0% | -1.1% |

The present application claims priority to Japanese Patent Application (Japanese Patent Application No. 2021-035448), filed on March 5, 2021, the contents of which are hereby incorporated by reference.

## Claims

1. An electrode for a redox flow battery comprising a carbon structural body, wherein, in a measurement of surface functional group concentrations of the carbon structural body, a carbon concentration is 82.0% or higher and 98.0% or lower, a nitrogen concentration is 1.0% or higher and 10.0% or lower, and an oxygen concentration is 1.0% or higher and 8.0% or lower.

2. The electrode for the redox flow battery according to claim 1, wherein the carbon structural body is a carbon foam having a three-dimensional network structure having continuous pores.

3. The electrode for the redox flow battery according to claim 1 or 2, wherein a crystallite size Lc of the carbon structural body is 1.60 or larger.

4. The electrode for the redox flow battery according to any one of claims 1 to 3,

   wherein the electrode for the redox flow battery has a flow path shape for an electrolyte solution, and
   the flow path shape is formed by a circulation portion constituting a flow path and an electrode portion where the carbon structural body is present in a sheet thickness direction thereof.

5. The electrode for the redox flow battery according to claim 4, wherein an aspect ratio of a width a of the electrode portion to a thickness z thereof, in terms of z/a, is lower than 1.0.

6. The electrode for the redox flow battery according to claim 4 or 5, wherein a ratio of an occupied area A of the electrode portion to an occupied area B of the circulation portion, in terms of A/B, is 1.0 or higher.

7. A membrane electrode assembly for a redox flow battery, comprising:

   the electrode for the redox flow battery according to any one of claims 1 to 6; and
   an ion-exchange membrane.

8. A membrane electrode assembly for a redox flow battery, comprising:

   a positive electrode selected from the electrode for the redox flow battery according to any one of claims 4 to 6;
   an ion-exchange membrane disposed on the positive electrode; and
   a negative electrode selected from the electrode for the redox flow battery, and disposed on an opposite side of the ion-exchange membrane to the positive electrode,

wherein each of the circulation portion and the electrode portion in the positive electrode is arranged on a same position as each of those in the negative electrode with the ion-exchange membrane therebetween.

**9.** A redox flow battery comprising, as a negative electrode, the electrode for the redox flow battery according to any one of claims 1 to 6.

**10.** A method for producing an electrode for a redox flow battery comprising a carbon structural body, the method comprising:

a surface oxidation step of bringing a carbon material having a carbon concentration of 92.0% or higher in a measurement of surface functional group concentrations into contact with a first gas comprising nitrogen and oxygen, to thereby obtain a carbon structural body precursor; and
a surface modification step of, after the surface oxidation step, bringing the carbon structural body precursor into contact with a second gas comprising ammonia to thereby obtain a carbon structural body,
wherein, in the measurement of the surface functional group concentrations of the carbon structural body, an oxygen concentration is 1.0% or higher and 8.0% or lower.

**11.** The method for producing the electrode for the redox flow battery according to claim 10, further comprising a carbonization step of heating a carbon material precursor at 1,500°C or higher and 2,500°C or lower to thereby obtain the carbon material.

Figure 1

ARBITRARY DIRECTION
WIDTH OF ELECTRODE PORTIONS, a
WIDTH OF CIRCULATION PORTIONS, b

Figure 2

SHEET THICKNESS Z
ARBITRARY DIRECTION

Figure 3

AREA OF REGION C SURROUNDED BY THICK OUTER FRAME:
AREA C

AREA OF SHADED REGION A:
AREA A

AREA OF VOID REGION B:
AREA B

Figure 4

Figure 5

AREA OF REGION C SURROUNDED BY THICK OUTER FRAME:
AREA C

AREA OF SHADED REGION A:
AREA A

AREA OF VOID REGION B:
AREA B

Figure 6

## INTERNATIONAL SEARCH REPORT

International application No. **PCT/JP2022/007621**

**A. CLASSIFICATION OF SUBJECT MATTER**

***H01M 4/96***(2006.01)i; ***H01M 4/88***(2006.01)i; ***H01M 8/18***(2006.01)i
FI: H01M4/96 B; H01M4/88 C; H01M4/96 M; H01M8/18

According to International Patent Classification (IPC) or to both national classification and IPC

**B. FIELDS SEARCHED**

Minimum documentation searched (classification system followed by classification symbols)

H01M4/96; H01M4/88; H01M8/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-27918 A (TOYOBO CO., LTD.) 02 February 2017 (2017-02-02) paragraphs [0058], [0067]-[0074], fig. 1 | 1-3, 9 |
| Y | | 4-9 |
| A | | 10-11 |
| Y | JP 2020-77540 A (ASAHI KASEI CORP.) 21 May 2020 (2020-05-21) paragraphs [0012]-[0020], fig. 2-3 | 4-9 |
| A | JP 2001-85021 A (TOYOBO CO., LTD.) 30 March 2001 (2001-03-30) | 1-11 |
| A | WO 2019/049755 A1 (TOYOBO CO., LTD.) 14 March 2019 (2019-03-14) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/007621**

| Patent document cited in search report | Publication date (day/month/year) | Patent family member(s) | Publication date (day/month/year) |
|---|---|---|---|
| JP 2017-27918 A | 02 February 2017 | (Family: none) | |
| JP 2020-77540 A | 21 May 2020 | (Family: none) | |
| JP 2001-85021 A | 30 March 2001 | (Family: none) | |
| WO 2019/049755 A1 | 14 March 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102487142
- CN 110194453
- JP 2021035448 A